# EUROPEAN PATENT SPECIFICATION

(11) **EP 2 086 909 B1**
(45) Date of publication and mention of the grant of the patent: **17.04.2013**
(21) Application number: 07820992.1
(22) Date of filing: 05.10.2007
(51) Int. Cl.: C04B 35/488

(54) **SINTERED MATERIAL COMPRISING STABILIZED ZIRCONIA, ALUMINA AND RARE EARTH ALUMINATE PLATELETS, MANUFACTURING METHOD AND USES**
GESINTERTES MATERIAL, UMFASSEND STABILISIERTES ZIRCONIUMOXID, ALUMINIUMOXID UND SELTENERDMETALLALUMINATPLÄTTCHEN, HERSTELLUNGSVERFAHREN UND VERWENDUNGEN
MATÉRIAU FRITTÉ COMPRENANT DE LA ZIRCONE, DE L'ALUMINE ET DES GRANULÉS D'ALUMINATE DE TERRE RARE STABILISÉS

(30) Priority: 05.10.2006 EP 06121793; 05.10.2006 US 849467 P
(43) Date of publication of application: 12.08.2009
(73) Proprietor: Vita Zahnfabrik H. Rauter GmbH & Co. KG, 79713 Bad Säckingen (DE)
(72) Inventor: BURGER, Wolfgang, 73207 Plochingen (DE); LEONHARDT, Wolfgang, 73269 Hochdorf (DE); THIEL, Norbert, 79713 Bad Säckingen (DE); STEPHAN, Marc, Lörrach, 79539 (DE)
(74) Representative: Fleck, Hermann-Josef
(86) International application number: PCT/EP2007/060619
(87) International publication number: WO 2008/040815

(56) References cited:
- MIURA M ET AL: "FORMATION OF PLATE-LIKE LANTHANUM-B-ALUMINATE CRYSTAL IN CE-TZP MATRIX" JOURNAL OF MATERIALS SCIENCE, SPRINGER / BUSINESS MEDIA, DORDRECHT, NL, vol. 29, no. 1, January 1994 (1994-01), pages 262-268, XP000433025 ISSN: 0022-2461 cited in the application
- TSUKUMA K ET AL: "Mechanical property and microstructure of TZP and TZP/Al2O3 composites" ADVANCED STRUCTURAL CERAMICS SYMPOSIUM MATER. RES. SOC PITTSBURGH, PA, USA, 1987, pages 123-135, XP008075951 ISBN: 0-931837-43-X cited in the application
- TSUKUMA K: "Conversion from [beta]-Ce2O3.11Al2O3 to [alpha]-Al2O3 in tetragonal ZrO2 matrix" JOURNAL OF THE AMERICAN CERAMIC SOCIETY AMERICAN CERAMIC SOC USA, vol. 83, no. 12, December 2000 (2000-12), pages 3219-3221, XP002423494 ISSN: 0002-7820 cited in the application
- SCHMID HERBERT K ET AL: "Redistribution of Ce and La during processing of Ce(La)-TZP/Al2O3 composites" J EUR CERAM SOC; JOURNAL OF THE EUROPEAN CERAMIC SOCIETY 1992, vol. 10, no. 5, 1992, pages 381-392, XP002461365
- R.C. ROPP AND B. CARROLL: "Solid-state kinetics of LaAl11O18" JOURNAL OF THE AMERICAN CERAMIC SOCIETY, vol. 63, 1980, pages 416-419, XP001266546

## Description

The present invention relates to a material based on a partially stabilized zirconia matrix, and to a process for the preparation and use of the material. The material according to the invention can be employed, for example, as a sintered compact for various fields of application.

Tetragonally stabilized zirconia materials are known in the prior art. They usually have a sigh mechanical strength and a relatively high fracture toughness. In addition, they are biocompatible.

As a disadvantage of these materials, their relatively low hydrothermal resistance has been found. In a humid atmosphere, the materials lose strength. A number of attempts have been made already in the prior art to improve their hydrothermal resistance. Thus, a significantly improved hydrothermal resistance from the alloying of alumina in concentrations of less than 0.5% by weight and applying sinter temperatures of 1350 °C over that of conventionally prepared tetragonally stabilized zirconia has been published in the form of a product data sheet (TOSOH ZIRCONIA POWDER "E" GRADES - new improved zirconia powder; printed April 03 in Japan).

In an earlier work, the coating of the zirconia grains with the stabilizing yttrium oxide has been described, and an amount of 0.1% by weight of alumina was already contained in this composition (W. Burger et al., Journal of Materials Science: Materials in Medicine 8 (1997) 113-118; C. Piconi et al., Biomaterials 19 (1998) 1489-1494). It was attempted to create improved materials.

Further, EP-A-0 466 836 relates to reinforcement of ceramic materials with platelets. This document relates to a ceramic body consisting of from 10 to 99% by volume of a zirconia matrix that is partially stabilized and from 1 to 90% by volume of SrAl₁₂O₁₉ platelets with an aspect ratio of > 2. The molar ratio of SrO : Al₂O₃ is specified to be 0.01 or 0.02 to 0.2 or 0.3. In the stoichiometric composition, the ratio of SrO : Al₂O₃ = 1:6 = 0.17. Thus, alumina and zirconia may be in excess.

EP-A-0 542 815 relates to a sintered molding consisting of a matrix material formed from an alumina/chromium oxide mixed crystal and embedded into the zirconia. As stabilizing oxides, oxides of cerium, praseodymium, terbium or yttrium are employed. The stabilizing oxides are added in such amounts that more than 90% by volume of the zirconia is in the tetragonal modification. The molar ratio between the zirconia containing the stabilizing oxides and chromium oxide is from 1000:1 to 20:1.

In particular, a material is described that comprises a matrix whose proportion is 60 to 98% by volume and which consists of 67.1% by volume of an Al₂O₃-Cr₂O₃ mixed crystal and from 0.8 to 32.9% by volume of hexagonal SrAl₁₂₋ₓCrₓO₁₉ platelets as well as 2-40% by volume of tetragonally stabilized zirconia.

DE-A-198 50 366 relates to a sintered compact with a matrix material that contains, in addition to an alumina/chromium oxide mixed crystal, another mixed crystal selected from at least one mixed crystal according to the general formulas stated therein and contains alkali metals, alkaline earth metals, cadmium, lead or mercury and rare earth metals.

M. Miura, H. Hongoh, T. Yogo, S. Hirano and T. Fujii disclose in "Formation of plate like lanthanum-β- Aluminate crystal in Ce-TZP matrix" (J. Mat. Sci., 29 (1994), 262 - 268) besides a material system Ce-TZP/Al₂O₃/La₂O₃ the influence of grain size of used aluminium oxide particles on platelet formation when using very fine powders. It was found a rather independent size of the platelets having a rather course grain size in the matrix independent of the sinter temperature used. Formation of platelets has been monitored beyond 1.500 °C and the complete formation of platelets started about 1.600 °C.

K. Tsukuma and T. Takahata, (Mat. Res. Soc. Syp. Porc., Vol. 78 (1987), 123 - 135) disclose a composition of material: ZrO₂ (2 Mol-% (≈< 3,6 wt-%)Y₂O₃), Al₂O₃ and La₂O₃ and disclose i.a. in table 2 40 wt-% LaAl₁₁O₁₈. The formation occurs at 1.450 °C; the preparation of samples is performed with sintering at 1.500 °C, followed by an hot isostatic pressing process also performed at 1.500 °C. The Y-TZP/β-LaAl₂O₃-mixture is not so deformable as a Y-TZP/Al₂O₃-mixture and based on this result it can be suggested that platelets take care for the suppression of a plastic deformation (p.133). Plastic deformation and fracture toughness are in a direct relation. To the skilled person these results do not suggest any relation between platelet formation and increase of fracture toughness.

K. Tsukuma (J. Am. Ceram. Soc., 83(200), 3219 - 3221) discloses the system Y-TZP:CeO₂:Al₂O₃ in a composition of 60:9,05:30,95. A formation of platelets during sintering in oxidizing atmosphere does not take place. During sintering in reducing atmosphere a new platelet formation can be monitored at a temperature of 1.400 °C. At a temperature of 1.500 °C in reducing atmosphere a platelet formation can be monitored. In the mechanical characterization the platelet containing material does not differ substantially from the material Y-TZP/Al₂O₃ so that the author concludes: "The high-temperature bending strength of the converted α-Al₂O₃ composite was almost the same as that of the β-Ce₂O₃ 11Al₂O₃ composite". Also these experiments teach the skilled person that there is no relation between increasing fracture toughness and platelet reinforced ceramics. Furthermore, no lanthanoxide is used.

The fracture toughness of the Y-TZP materials is still too low today for many applications.

The object of the invention is to provide a material having an improved hydrothermal resistance, high strength and fracture toughness. This object is achieved by the material according to claim 1.

The symbol RE means one or more representatives of rare earth metals.

The material according to the invention has a high hydrothermal stability.

The hexagonal platelets of the material according to the invention contain lanthanum oxide.

In its chemical composition, the material according to the invention is based on a tetragonally stabilized zirconia matrix. Homogeneously distributed globular alumina particles are incorporated into this matrix. Part of these particles react with the platelet-forming rare earth oxide during the sintering process to form hexagonal platelets of general formula REAl₁₁O₁₈. The aspect ratio of these hexagonal platelets is at least 2. The abundance of the platelets relative to globular alumina in the zirconia matrix is controlled by the alloyed amount of alumina and rare earth oxide.

The material according to the invention can be prepared by a process comprising the following steps:
- grinding the powder mixture in aqueous suspension;
- adding a binder;
- eliminating coarse particles;
- spray-drying;
- pressing;
- sintering.

A preferred form of the sintering process is hot isostatic postcompaction. When this process is applied, the compact is presintered at first to a density at which a closed porosity is reached. The thus presintered compact is subsequently subjected to a second temperature treatment, an isostatic pressure of from 1 to 150 MPa acting on the component during such temperature treatment. This process step is followed by a further temperature treatment under normal pressure in order to release any residual stress.

Alternatively to pressing, the material may also be admixed with organic auxiliaries in order to become flowable at higher temperatures. This flowable composition is processed by the injection molding method.

The material according to the invention is particularly suitable for preparing ceramic compacts that can be employed in many technical fields.

The sintered compacts according to the invention are characterized by a high mechanical strength of ≥ 800 MPa as measured according to DIN EN ISO 6872, a high fracture toughness of ≥ 6 MPa·m^{1/2} as measured according to DIN CEN/TS 14425-5, a modulus of elasticity of ≤ 250 GPa as measured according to DIN EN 843 Part 2 and a Vickers hardness HV_{0.5} ≤ 1500 as measured according to DIN 50113.

There is provided a process for preparing a ceramic compact according to the invention by sintering the material according to the invention.

Due to its low modulus of elasticity and its improved fracture toughness, the compact according to the invention can be employed in the medical field as a high strength and tough material for bridges in the orthodontic field, as a dental implant, as a hip, knee, shoulder, ankle and finger implant.

In engineering, in the mechanical field, the compact according to the invention can be employed, in particular, as a wear component with sealing properties and a high damage tolerance due to its high mechanical strength and its low, for ceramic materials, modulus of elasticity.

The invention is further illustrated by the following Examples.

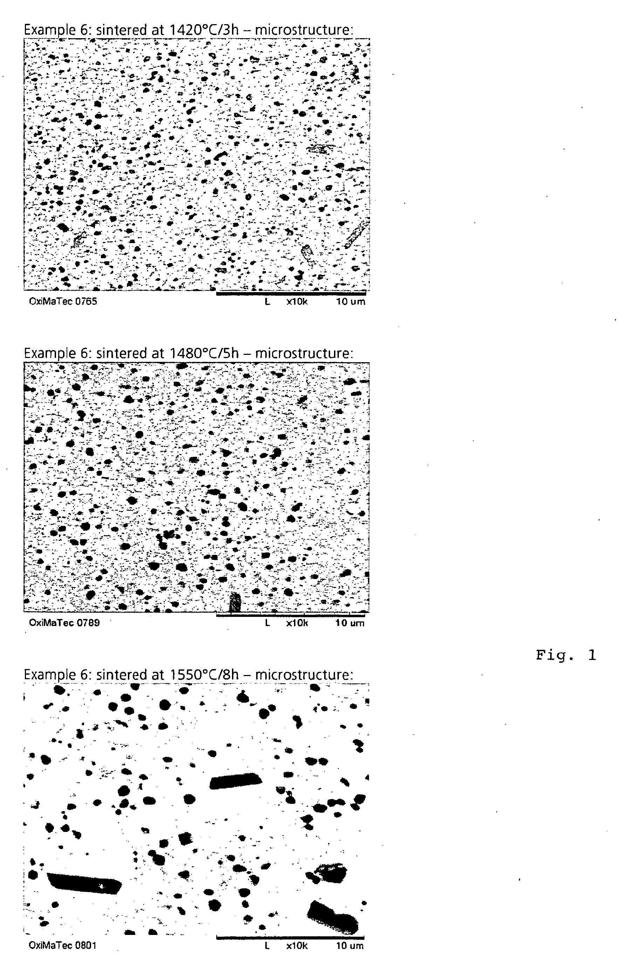

Fig. 1 shows micrographs of the composition of example 6 after treatment at different conditions, sintering temperature at 1420 for 3 h, sintering temperature at 1480 for 5 h, and sintering temperature at 1550 for 8 h.

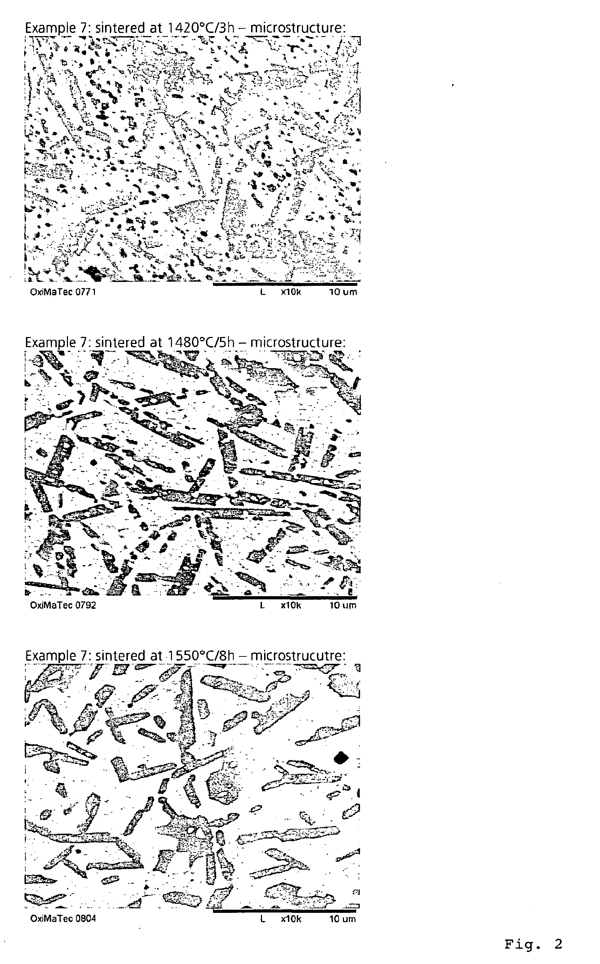

Fig. 2 shows micrographs of the composition of example 7 after treatment at different conditions, sintering temperature at 1420 for 3 h, sintering temperature at 1480 for 5 h, and sintering temperature at 1550 for 8 h.

### Examples 1-7

The material mixtures summarized in Table 1 were first dispersed in water, and the suspension obtained was subsequently deagglomerated and homogenized in a mixed grinding operation. After having been separated from the milling balls, the ground suspension was admixed with a temporary binder. Subsequently, ready-to-press granules were prepared by applying spray-drying technology. From these ready-to-press granules, specimens were pressed and sintered without pressure.

**Table 1**

| | Ex. 1 | Ex. 2 | Ex. 3 | Ex. 4 | Ex. 5 | Ex. 6 | Ex.7 |
|---|---|---|---|---|---|---|---|
| ZrO₂ [% by weight] | 59.2 | 82.0 | 80.0 | 74.0 | 86.8 | 84.5 | 67.0 |
| Y₂O₃[% by weight] | 1.0 | 3.0 | 1.7 | 3.0 | 4.0 | 1.9 | 2.0 |
| CeO₂ [% by weight] | 11.1 | 5.0 | 8.3 | 3.0 | 4.2 | 8.6 | 6.0 |
| Al₂O₃ [% by weight] | 25.0 | 8.5 | 8.3 | 18.6 | 4.5 | 4.5 | 20.0 |
| La₂O₃[% by weight] | 3.7 | 1.5 | 1.7 | 1.4 | 0.5 | 0.5 | 5.0 |

| | | | | | | | |
|---|---|---|---|---|---|---|---|
| Ex. 1 to Ex. 7 are reference examples. | | | | | | | |

## Claims

1. A ceramic compact obtained by sintering a material comprising:
a) from 98-50 % by volume of zirconia as a matrix,
i) stabilized with a stabilizing composition having
ii) of from 2 to 3 mole percent of yttria and of from 10 to 15 mole percent of ceria; wherein the term mole percent is related to the zirconia matrix and
b) from 2 to 50 % by volume of alumina; wherein 5 to 90 % by volume of alumina is got in the form of hexagonal platelets of general formula REAl₁₁O₁₈ by reaction of homogeneously distributed globular alumina particles incorporated into the zirconia matrix with the platelet forming rare earth oxide during the sintering process and wherein RE means rare earth metal and said hexagonal platelets contain lanthanum oxide,
having a mechanical strength of ≥ 800 MPa as measured according to DIN EN ISO 6872, and having a fracture toughness of ≥ 6 MPa·m^{1/2} as measured according to Din CEN/TS 14425-5, and having a modulus of elasticity of ≤ 250 GPa as measured according to DIN EN 843 Part 2.

2. The ceramic compact according to claim 1, wherein the aspect ratio of said hexagonal platelets is at least 2.

3. The compact according to claim 1 or 2,
having a Wickers hardness HV_{0.5} of ≤ 1500.

4. The compact according to one of the preceding claims,
wherein the sintering process is hot isostatic postcompaction.

5. The compact according to claim 4 wherein before hot isostatic postcompaction the compact is presintered to a density at which a closed porosity is reached.

6. The compact according to one of claims 1 to 5 for use in medicine.

7. The compact according to claim 6 for use in dental-prosthetic care, as a dental implant, as a hip, knee, shoulder, ankle and finger implant.

8. The compact according to claim 6 for use as a tool for inserting implant screws in the dental field, drill, scalpel, broaching tool and cutter.

9. Use of the compact according to one of claims 1 to 5 in engineering.

10. The use according to claim 9 in the mechanical field in hydraulics and pneumatics, as a wear component with sealing properties, as a printing plate, as a heat-insulating component, as a technical cutting edge and as a non-lubricated glide pairing in microprecision technology.

## Patentansprüche

1. Keramischer Presskörper, erhalten durch Sintern eines Materials, umfassend:
a) 98-50 Vol.-% Zirkoniumoxid als Matrix,
i) stabilisiert mit einer stabilisierenden Zusammensetzung mit
ii) 2 bis 3 Molprozent Yttriumoxid und 10 bis 15 Molprozent Ceroxid; wobei sich der Begriff Molprozent auf die Zirkoniumoxid-Matrix bezieht, und
b) 2 bis 50 Vol.-% Aluminiumoxid;
wobei 5 bis 90 Vol.-% an Aluminiumoxid in der Form von hexagonalen Plättchen der allgemeinen Formel REAl₁₁O₁₈ durch Umsetzung von homogen verteilten globulären Aluminiumoxid-Teilchen, einverleibt in die Zirkoniumoxid-Matrix, mit dem plättchenbildenden Seltenerdoxid während des Sinterverfahrens erhalten sind und wobei RE Seltenerdmetall bedeutet und die hexagonalen Plättchen Lanthanoxid enthalten,
mit einer mechanischen Festigkeit von ≥ 800 MPa wie gemessen gemäß DIN EN ISO 6872 und einer Bruchzähigkeit von ≥ 6 MPa.m^{1/2} wie gemessen gemäß DIN CEN/TS 14425-5 und mit einem Elastizitätsmodul von ≤ 250 GPa wie gemessen gemäß DIN EN 843 Teil 2.

2. Keramischer Presskörper gemäß Anspruch 1, wobei das Aspektverhältnis der hexagonalen Plättchen wenigstens 2 beträgt.

3. Presskörper gemäß Anspruch 1 oder 2 mit einer Vickers-Härte HV_{0,5} von ≤ 1500.

4. Presskörper gemäß einem der vorstehenden Ansprüche, wobei das Sinterverfahren heißisostatische Nachkompaktierung ist.

5. Presskörper gemäß Anspruch 4, wobei vor der heißisostatischen Nachkompaktierung der Presskörper auf eine Dichte, bei der eine geschlossene Porosität erreicht ist, vorgesintert wird.

6. Presskörper gemäß einem der Ansprüche 1 bis 5 für die Verwendung in der Medizin.

7. Presskörper gemäß Anspruch 6 für die Verwendung bei der Zahnprothese-Pflege, als Zahnimplantat, als Hüft-, Knie-, Schulter-, Knöchel- und Fingerimplantat.

8. Presskörper gemäß Anspruch 6 für die Verwendung als Werkzeug zum Einführen von Implantatschrauben in das Zahnfeld, Bohrer, Skalpell, Ausräumwerkzeug und Schneider.

9. Verwendung des Presskörpers gemäß einem der Ansprüche 1 bis 5 in der Technik.

10. Verwendung gemäß Anspruch 9 auf dem mechanischen Gebiet in der Hydraulik und Pneumatik, als Verschleißkomponente mit Versiegelungseigenschaften, als Druckplatte, als wärmeisolierende Komponente, als technische Schneidekante und als nichtgeschmierte Gleitpaarung in der Mikropräzisionstechnologie.

## Revendications

1. Comprimé céramique obtenu en frittant un matériau comprenant :
a) de 98 à 50 % en volume de zircone comme matrice,
i) stabilisée avec une composition stabilisante comportant
ii)de 2 à 3 pour cent en moles d'oxyde d'yttrium et de 10 à 15 pour cent en moles d'oxyde de cérium, le terme « pour cent en moles » se rapportant à la matrice de zircone, et
b) de 2 à 50 % en volume d'alumine,
dans lequel 5 à 90 % en volume de l'alumine est obtenue sous la forme de plaquettes hexagonales de formule générale REAl₁₁O₁₈ par réaction de particules globulaires d'alumine distribuées de façon homogène incorporées dans la matrice de zircone avec l'oxyde de terre rare constituant les plaquettes pendant le procédé de frittage, et dans lequel RE désigne une terre rare et lesdites plaquettes hexagonales contiennent de l'oxyde de lanthane,
ayant une résistance mécanique ≥ 800 MPa telle que mesurée selon DIN EN ISO 6872, ayant une ténacité à la rupture ≥ 6 MPa·m½ telle que mesurée selon DIN CEN/TS 14425-5, et ayant un module d'élasticité ≤ 250 GPa tel que mesuré selon DIN EN 843 Partie 2.

2. Comprimé céramique selon la revendication 1, dans lequel le rapport de forme desdites plaquettes hexagonales est d'au moins 2.

3. Comprimé selon la revendication 1 ou 2, ayant une dureté Vickers H_{0,5} ≤ 1500.

4. Comprimé selon l'une des revendications précédentes, dans lequel le procédé de frittage est une post-compression isostatique à chaud.

5. Comprimé selon la revendication 4 dans lequel, avant post-compression isostatique à chaud, le comprimé est préfritté jusqu'à une densité à laquelle une porosité fermée est atteinte.

6. Comprimé selon l'une des revendications 1 à 5 pour utilisation en médecine.

7. Comprimé selon la revendication 6 pour utilisation en soins dentaires prothétiques, comme implant dentaire, comme prothèse de hanche, genou, épaule, cheville et doigt.

8. Comprimé selon la revendication 6 pour utilisation comme outil pour insérer des vis d'implants dans le domaine dentaire, fraise, scalpel, outil de brochage et couteau.

9. Utilisation du comprimé selon l'une des revendications 1 à 5 en ingénierie.

10. Utilisation selon la revendication 9 dans le domaine mécanique en hydraulique et pneumatique, comme composant d'usure avec des propriétés de scellement, comme plaque d'impression, comme composant calorifuge, comme tranchant technique et comme paire de glissement non lubrifiée en technologie de microprécision.
